# EUROPÄISCHE PATENTANMELDUNG

(11) **EP 3 667 882 A1**
(43) Veröffentlichungstag der Anmeldung: **17.06.2020**
(21) Anmeldenummer: 18211267.2
(22) Anmeldetag: 10.12.2018
(51) Int. Cl.: H02M 1/12, H02M 7/5387

(54) **SELBSTGEFÜHRTER WECHSELRICHTER UND DESSEN BETREIBEN**

(71) Anmelder: Siemens Aktiengesellschaft, 80333 München (DE)
(72) Erfinder: Wießmann, Harald, 91058 Erlangen (DE)

(57) **Zusammenfassung**

Die Erfindung betrifft ein Verfahren zum Betreiben eines selbstgeführten Wechselrichters (1), der aus einem Gleichspannungskreis (3) gespeist wird und elektronische Schalter (S1, S2, S3) zum Erzeugen einer dreiphasigen Ausgangsspannung und ein den elektronischen Schaltern (S1, S2, S3) nachgeschaltetes, an den Gleichspannungskreis (3) gekoppeltes dreiphasiges Ausgangsfilter (5) aufweist. Die elektronischen Schalter (S1, S2, S3) werden mit einer Raumzeigermodulation gesteuert, bei der eine Nullsystemspannung von Filtereingangsspannungen des Ausgangsfilters (5) in Abhängigkeit von einem Sollspannungsraumzeiger (u_{α,β_s}) der Raumzeigermodulation und Filtereingangsströmen (i1_in, i2_in, i3_in) des Ausgangsfilters (5) derart geregelt wird, dass Schwingungen in einem Nullsystem der Filtereingangsströme (i1_in, i2_in, i3_in) unterdrückt werden.

## Beschreibung

Die Erfindung betrifft einen selbstgeführten Wechselrichter, der aus einem Gleichspannungskreis gespeist wird und elektronische Schalter zum Erzeugen einer dreiphasigen Ausgangsspannung und ein den elektronischen Schaltern nachgeschaltetes, an den Gleichspannungskreis gekoppeltes dreiphasiges Ausgangsfilter aufweist.

Selbstgeführte Wechselrichter, insbesondere schnell schaltende Wechselrichter, weisen häufig ein Ausgangsfilter auf, um beim Schalten auftretende hohe Spannungssteilheiten zu begrenzen und/oder den Verzicht auf geschirmte Leitungen zu ermöglichen. Eine spezielle Variante eines Ausgangsfilters koppelt Störungen zurück auf einen den Wechselrichter speisenden Gleichspannungskreis.

Ausgangsfilter von Wechselrichtern haben häufig eine ausgeprägte Resonanzfrequenz. Um eine möglichst hohe Dämpfung im Bereich einer Schaltfrequenz des Wechselrichters und deren Vielfachen zu erhalten, werden die Bauteile eines Ausgangsfilters üblicherweise so ausgewählt, dass sich die Resonanzfrequenz des Ausgangsfilters im Bereich zwischen einer maximalen Grundschwingungsausgangsfrequenz und der Schaltfrequenz befindet. Zur Stromregelung können Filterausgangsströme des Ausgangsfilters verwendet werden. Die Verwendung der Filterausgangsströme kann das Verhalten der Stromregelung gegenüber einer Verwendung der Filtereingangsströme des Ausgangsfilters vorteilhaft beeinflussen.

Durch die Anbindung des Ausgangsfilters an den Gleichspannungskreis können Teile der Filtereingangsströme des Ausgangsfilters auch direkt in den Gleichspannungskreis fließen. Diese so genannten Common-Mode-Ströme werden von einer Stromregelung auf der Ausgangsseite nicht erfasst und können somit auch nicht ausgeregelt werden. Auch eine klassische dq-Stromregelung mit einer Strommessung nach dem Wechselrichter würde diese Ströme nicht erfassen. Betrachtet man die Ströme nach einer dq0-Transformation, ergibt sich neben den eigentlichen d- und q-Komponenten in dieser Konstellation auch eine erhebliche Nullsystemkomponente. Auch in dem Common-Mode-Kreis ist die Resonanzfrequenz des Ausgangsfilters sichtbar und führt zu Schwingungen der Filtereingangsströme, die die Filterkomponenten des Ausgangsfilters und die elektronischen Schalter des Wechselrichters belasten.

Ein an den Gleichspannungskreis gekoppeltes Ausgangsfilter benötigt daher Maßnahmen zur Dämpfung dieser Schwingungen. Ein Ansatz ist das Einbringen von Dämpfungswiderständen, um die Amplitudenüberhöhung im Bereich der Resonanzfrequenz zu verringern. Diese Dämpfungswiderstände erfordern jedoch zusätzlichen Bauraum und erzeugen Verluste, die abgeführt werden müssen.

Daneben können auch aktive elektronische Schaltungen eingesetzt werden, um Schwingungen zu dämpfen. Diese Alternative ist jedoch sehr aufwändig. Eine weitere Lösung zur Umgehung dieser Problematik ist die Änderung der Filtertopologie. Trennt man beispielsweise die Verbindung zum Gleichspannungskreis auf, können prinzipbedingt keine Common-Mode-Ströme mehr fließen, allerdings verliert man auch die Filterwirkung für Common-Mode-Störungen. Durch Einsatz zusätzlicher Bauelemente, beispielsweise einer Common-Mode-Induktivität oder zusätzlicher Kondensatoren, kann die Filterübertragungsfunktion für Common-Mode- und so genannte Differential-Mode-Signale unterschiedlich gestaltet und dadurch können Resonanzschwingungen im Common-Mode-System ebenfalls verringert werden. Allerdings erfordert auch diese Lösung zusätzliche Bauelemente und zusätzlichen Bauraum.

Der Erfindung liegt die Aufgabe zugrunde, Schwingungen von Filtereingangsströmen in einem selbstgeführten Wechselrichter mit einem Ausgangsfilter, der an einen den Wechselrichter speisenden Gleichspannungskreis gekoppelt ist, zu unterdrücken, ohne zusätzliche Bauelemente zu verwenden.

Die Aufgabe wird erfindungsgemäß durch ein Verfahren mit den Merkmalen des Anspruchs 1 und einen selbstgeführten Wechselrichter mit den Merkmalen des Anspruchs 10 gelöst.

Vorteilhafte Ausgestaltungen der Erfindung sind Gegenstand der abhängigen Ansprüche.

Bei dem erfindungsgemäßen Verfahren zum Betreiben eines selbstgeführten Wechselrichters, der aus einem Gleichspannungskreis gespeist wird und elektronische Schalter zum Erzeugen einer dreiphasigen Ausgangsspannung und ein den elektronischen Schaltern nachgeschaltetes, an den Gleichspannungskreis gekoppeltes dreiphasiges Ausgangsfilter aufweist, werden die elektronischen Schalter mit einer Raumzeigermodulation gesteuert, bei der eine Nullsystemspannung von Filtereingangsspannungen des Ausgangsfilters in Abhängigkeit von einem Sollspannungsraumzeiger der Raumzeigermodulation und Filtereingangsströmen des Ausgangsfilters derart geregelt wird, dass Schwingungen in einem Nullsystem der Filtereingangsströme unterdrückt werden.

Die Erfindung sieht also vor, gezielt Schwingungen in einem Nullsystem der Filtereingangsströme des Ausgangsfilters durch eine Modifizierung einer Raumzeigermodulation, mit der die elektronischen Schalter angesteuert werden, zu unterdrücken. Bei der Verwendung einer herkömmlichen Raumzeigermodulation ändert sich ein Nullsystem in den Phasen der Wechselrichterspannung in Abhängigkeit von dem Modulationsgrad und der Winkellage der Spannung. Die Änderungen des Nullsystems führen zu Common-Mode-Anregungen des Ausgangsfilters und Schwingungen der Filtereingangsströme. Durch eine gezielte Beeinflussung der Nullsystemspannung der Filtereingangsspannungen des Ausgangsfilters durch eine Modifizierung der Raumzeigermodulation können daher Schwingungen in einem Nullsystem der Filtereingangsströme unterdrückt werden. Durch das erfindungemäße Verfahren werden somit Schwingungen der Filtereingangsströme und damit Belastungen des Ausgangsfilters und der elektronischen Schalter des Wechselrichters reduziert, ohne weitere passive Bauelemente, beispielsweise Dämpfungswiderstände, zusätzliche Induktivitäten oder Kondensatoren, oder aktive elektronische Schaltungen einzusetzen.

Eine Ausgestaltung der Erfindung sieht vor, dass die Nullsystemspannung der Filtereingangsspannungen durch eine Nullsystemverschiebung geregelt wird, die ein Zeitdauerverhältnis von Zeitdauern definiert, in denen während einer Taktperiode der Raumzeigermodulation jeweils einer der Nullspannungsraumzeiger angelegt wird. Diese Ausgestaltung der Erfindung nutzt aus, dass es mehrere Nullspannungsraumzeiger gibt und die Nullsystemspannung der Filtereingangsspannungen durch das Zeitdauerverhältnis der Zeitdauern, in denen während einer Taktperiode der Raumzeigermodulation jeweils einer der Nullspannungsraumzeiger angelegt wird, beeinflusst werden kann.

Eine Weitergestaltung der vorgenannten Ausgestaltung der Erfindung sieht vor, dass die Nullsystemverschiebung zwei Verschiebungsanteile aufweist, wobei ein erster Verschiebungsanteil in Abhängigkeit von dem Sollspannungsraumzeiger der Raumzeigermodulation bestimmt wird und der zweite Verschiebungsanteil in Abhängigkeit von den Filtereingangsströmen des Ausgangsfilters gebildet wird. Beispielsweise wird die Nullsystemverschiebung durch eine Addition der beiden Verschiebungsanteile gebildet. Der erste Verschiebungsanteil definiert beispielsweise ein Zeitdauerverhältnis, mit dem der Sollspannungsraumzeiger nullsystemfrei realisierbar ist. Durch den zweiten Verschiebungsanteil wird eine Nullsystemspannung der Filtereingangsspannungen bewirkt, die Schwingungen im Nullsystem der Filtereingangsströme dämpft. Der zweite Verschiebungsanteil wird beispielsweise mittels eines P-Reglers in Abhängigkeit von einem Summenstrom ermittelt, der aus den Filtereingangsströmen des Ausgangsfilters gebildet wird. Beispielsweise werden die Filtereingangsströme des Ausgangsfilters gemessen und der Summenstrom wird durch Addition der gemessenen Filtereingangsströme gebildet.

Die vorgenannten Ausgestaltungen der Erfindung ermöglichen, durch den ersten Verschiebungsanteil der Nullsystemverschiebung Anregungen von Common-Mode-Schwingungen möglichst zu vermeiden und durch den zweiten Verschiebungsanteil Schwingungen in Filtereingangsströmen zu dämpfen. Eine Vermeidung von Anregungen von Common-Mode-Schwingungen durch eine nullsystemfreie Realisierung des Sollspannungsraumzeigers ist vornehmlich bei relativ kleinen Modulationsgraden möglich, das heißt bei kleinen Verhältnissen der Sollspannung zu der Gleichspannung des Gleichspannungskreises. Eine derart nullsystembereinigte Raumzeigermodulation ist jedoch bei höheren Modulationsgraden nicht wirksam und kann langsam abklingende Schwingungen im Nullsystem der Filtereingangsströme nicht dämpfen. Zum Dämpfen dieser Schwingungen dient der zweite Verschiebungsanteil der Nullsystemverschiebung, der von den Filtereingangsströmen abhängt und Schwingungen im Nullsystem der Filtereingangsströme durch eine den Schwingungen entgegenwirkende Nullsystemverschiebung dämpft.

Eine weitere Ausgestaltung der Erfindung sieht vor, dass der Sollspannungsraumzeiger der Raumzeigermodulation in Abhängigkeit von Filterausgangsströmen des Ausgangsfilters gebildet wird. Mit anderen Worten sieht diese Ausgestaltung der Erfindung vor, dass die Raumzeigermodulation die Filterausgangsströme regelt und dabei gleichzeitig Schwingungen in einem Nullsystem der Filtereingangsströme unterdrückt.

Ein erfindungsgemäßer selbstgeführter Wechselrichter wird aus einem Gleichspannungskreis gespeist und umfasst elektronische Schalter zum Erzeugen einer dreiphasigen Ausgangsspannung, ein den elektronischen Schaltern nachgeschaltetes, an den Gleichspannungskreis gekoppeltes dreiphasiges Ausgangsfilter und eine Steuereinheit. Die Steuereinheit ist zur Ansteuerung der elektronischen Schalter mit einer Raumzeigermodulation eingerichtet, bei der eine Nullsystemspannung von Filtereingangsspannungen des Ausgangsfilters in Abhängigkeit von einem Sollspannungsraumzeiger der Raumzeigermodulation und Filtereingangsströmen des Ausgangsfilters derart geregelt wird, dass Schwingungen in einem Nullsystem der Filtereingangsströme unterdrückt werden. Der Wechselrichter kann in Zwei-Level- oder Multi-Level-Topologie ausgeführt sein. Die Vorteile eines erfindungsgemäßen Wechselrichters entsprechen oben bereits genannten Vorteilen des erfindungsgemäßen Verfahrens. Ausgestaltungen des erfindungsgemäßen Wechselrichters entsprechen Ausgestaltungen des erfindungsgemäßen Verfahrens.

Insbesondere sieht eine Ausgestaltung des erfindungsgemäßen Wechselrichters vor, dass die Steuereinheit dazu eingerichtet ist, die Nullsystemspannung der Filtereingangsspannungen durch eine Nullsystemverschiebung zu regeln, die ein Zeitdauerverhältnis von Zeitdauern definiert, in denen während einer Taktperiode der Raumzeigermodulation jeweils einer der Nullspannungsraumzeiger angelegt wird. Beispielsweise weist die Steuereinheit einen Raumzeigermodulator auf, der dazu eingerichtet ist, einen ersten Verschiebungsanteil der Nullsystemverschiebung in Abhängigkeit von dem Sollspannungsraumzeiger der Raumzeigermodulation zu bestimmen. Ferner weist die Steuereinheit beispielsweise einen P-Regler auf, der dazu eingerichtet ist, einen zweiten Verschiebungsanteil der Nullsystemverschiebung in Abhängigkeit von einem Summenstrom, der aus den Filtereingangsströmen des Ausgangsfilters gebildet wird, zu bilden.

Eine weitere Ausgestaltung des erfindungsgemäßen Wechselrichters sieht vor, dass die Steuereinheit dazu ausgebildet ist, einen Sollspannungsraumzeiger der Raumzeigermodulation in Abhängigkeit von Filterausgangsströmen des Ausgangsfilters zu bilden.

Eine weitere Ausgestaltung des erfindungsgemäßen Wechselrichters sieht eine erste Messvorrichtung zum Messen der Filtereingangsströme und/oder eine zweite Messvorrichtung zum Messen von Filterausgangsströmen des Ausgangsfilters vor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines selbstgeführten Wechselrichters,
FIG 2 ein Blockdiagramm eines selbstgeführten Wechselrichters.

Einander entsprechende Teile sind in den Figuren mit denselben Bezugszeichen versehen.

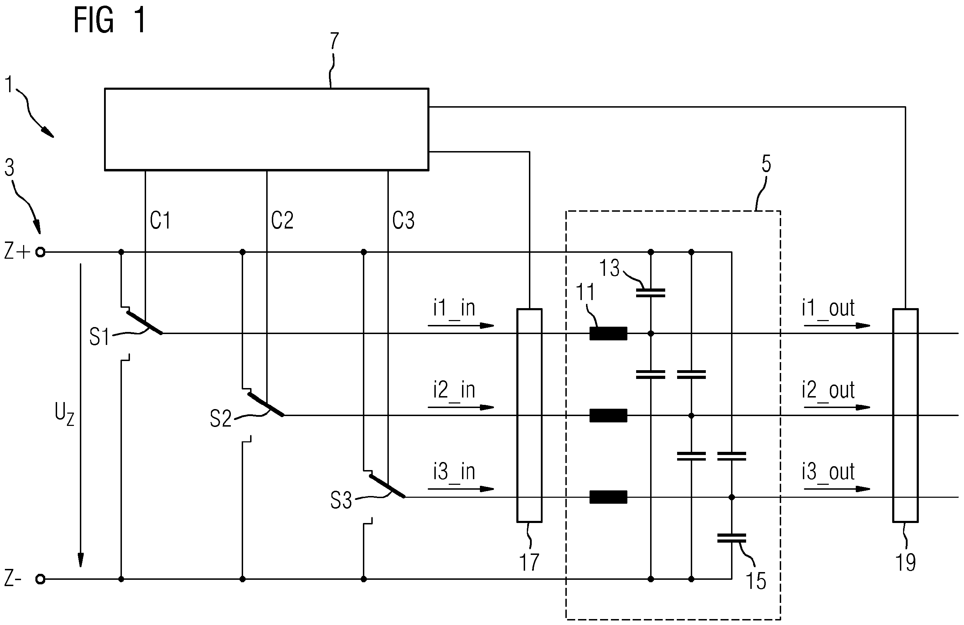

Figur 1 zeigt einen Schaltplan eines selbstgeführten Wechselrichters 1. Der Wechselrichter 1 wird aus einem Gleichspannungskreis 3 gespeist. Der Wechselrichter 1 weist elektronische Schalter S1, S2, S3 zum Erzeugen einer dreiphasigen Ausgangsspannung, ein dreiphasiges Ausgangsfilter 5 und eine Steuereinheit 7 zur Stromregelung auf. Der Wechselrichter 1 und der Gleichspannungskreis 3 können Komponenten eines Umrichters sein, der außerdem einen Gleichrichter aufweist, der mit dem Wechselrichter 1 durch den Gleichspannungskreis 3 verbunden ist.

Jeder elektronische Schalter S1, S2, S3 schaltet eine Phase der Ausgangsspannung des Wechselrichters 1 und weist einen ersten Schaltzustand, in dem er die Phase auf ein erstes Gleichspannungspotential Z+ des Gleichspannungskreises 3 legt, und einen zweiten Schaltzustand, in dem er die Phase auf ein zweites Gleichspannungspotential Z- des Gleichspannungskreises 3 legt, auf. Die Potentialdifferenz zwischen den Gleichspannungspotentialen Z+, Z- ist eine Gleichspannung U_{Z} des Gleichspannungskreises 3. Die elektronischen Schalter S1, S2, S3 sind in Figur 1 nur schematisch dargestellt und beispielsweise jeweils als eine Halbbrücke mit zwei Halbleiterschaltern 9 ausgebildet. Jeder Halbleiterschalter 9 ist beispielsweise als ein IGBT (Bipolartransistor mit isolierter Gate-Elektrode) oder als ein MOSFET (Metall-Oxid-Halbleiter-Feldeffekttransistor) ausgebildet.

Das Ausgangsfilter 5 ist den elektronischen Schaltern S1, S2, S3 nachgeschaltet und weist für jede Phase der Ausgangsspannung eine Filterinduktivität 11 und zwei Filterkapazitäten 13, 15 auf. Die Filterinduktivität 11 einer Phase ist mit dem elektronischen Schalter S1, S2, S3 dieser Phase verbunden. Über die Filterkapazitäten 13, 15 ist das Ausgangsfilter 5 mit dem Gleichspannungskreis 3 verbunden. Dabei ist eine erste Filterkapazität 13 jeder Phase mit dem ersten Gleichspannungspotential Z+ des Gleichspannungskreises 3 verbunden und die zweite Filterkapazität 15 jeder Phase ist mit dem zweiten Gleichspannungspotential Z- des Gleichspannungskreises 3 verbunden.

Zwischen dem elektronischen Schalter S1, S2, S3 einer Phase und dem Ausgangsfilter 5 fließt ein Filtereingangsstrom i1_in, i2_in, i3_in dieser Phase. Hinter dem Ausgangsfilter 5, das heißt ausgangsseitig, fließen Filterausgangsströme i1_out, i2_out, i3_out, die jeweils einen Ausgangsstrom des Wechselrichters 1 für eine Phase bilden. Über die Filterkapazitäten 13, 15 können Common-Mode-Ströme des Ausgangsfilters 5 fließen.

Die Steuereinheit 7 steuert die elektronischen Schalter S1, S2, S3 mit Ansteuersignalen C1, C2, C3 an. Die Ansteuersignale C1, C2, C2 werden von der Steuereinheit 7 mit einer Raumzeigermodulation gebildet, bei der in einer unten näher beschriebenen Weise eine Nullsystemspannung von Filtereingangsspannungen des Ausgangsfilters 5 in Abhängigkeit von einem Sollspannungsraumzeiger u_{α,β_s} der Raumzeigermodulation und den Filtereingangsströmen i1_in, i2_in, i3_in derart geregelt wird, dass Schwingungen in einem Nullsystem der Filtereingangsströme i1_in, i2_in, i3_in unterdrückt werden, wobei der Sollspannungsraumzeiger u_{α,β_s} in Abhängigkeit von den Filterausgangsströmen i1_out, i2_out, i3_out gebildet wird. Die Filtereingangsströme i1_in, i2_in, i3_in werden mittels einer ersten Messvorrichtung 17 erfasst. Die Filterausgangsströme i1_out, i2_out, i3_out werden mittels einer zweiten Messvorrichtung 19 erfasst.

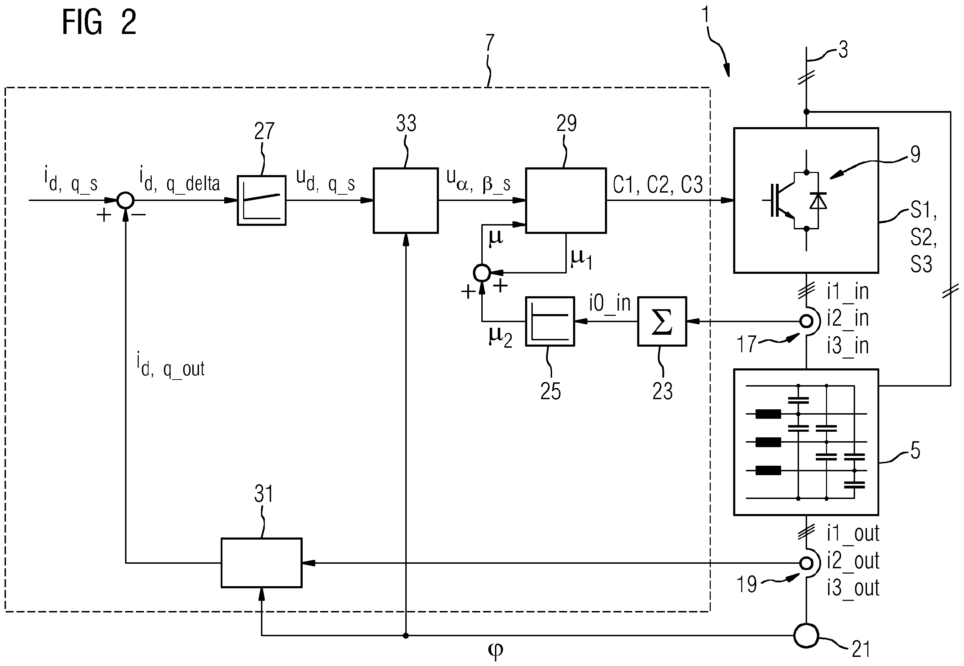

Figur 2 zeigt ein Blockdiagramm des in Figur 1 dargestellten Wechselrichters 1, wobei der Ausgang des Wechselrichters 1 mit einem dreiphasigen Elektromotor 21 verbunden ist, so dass die Filterausgangsströme i1_out, i2_out, i3_out des Wechselrichters 1 die Motorströme des Elektromotors 21 sind. Der Elektromotor 21 ist als eine rotierende elektrische Maschine mit einem Rotor und einem Stator ausgebildet und weist einen Winkellagegeber auf, der einen Rotorwinkel ϕ erfasst, welcher eine Stellung des Rotors relativ zu dem Stator angibt. Alternativ kann der Elektromotor 21 auch als ein Linearmotor mit einem Ständer und einem relativ zu dem Ständer linear bewegbaren Läufer ausgebildet sein und einen Positionsgeber aufweisen, der eine Läuferposition des Läufers relativ zu dem Ständer angibt. Die Läuferposition tritt dann an die Stelle des Rotorwinkels ϕ.

Die Steuereinheit 7 ist dazu eingerichtet, das im Folgenden beschriebene erfindungsgemäße Verfahren auszuführen. Dazu weist die Steuereinheit 7 einen Addierer 23, einen P-Regler 25, einen PI-Regler 27, einen Raumzeigermodulator 29 und zwei Transformierer 31, 33 auf.

Die von der zweiten Messvorrichtung 19 erfassten Istwerte der Filterausgangsströme i1_out, i2_out, i3_out und der Istwert des Rotorwinkel ϕ werden einem ersten Transformierer 31 zugeführt. Der erste Transformierer 31 ermittelt aus diesen Istwerten durch eine dq-Transformation einen Iststromraumzeiger i_{d,q_out} der Filterausgangsströme i1_out, i2_out, i3_out in einem mit dem Rotor rotierenden dq-Koordinatensystem.

Aus dem Iststromraumzeiger i_{d,q_out} und einem Sollstromraumzeiger i_{d,q_s} wird ein Differenzstromraumzeiger i_{d,q_delta} gebildet, indem der Iststromraumzeiger i_{d,q_out} von dem Sollstromraumzeiger i_{d,q_s} subtrahiert wird. Der Differenzstromraumzeiger i_{d,q_delta} ist die Regelabweichung der Stromregelung der Filterausgangsströme i1_out, i2_out, i3_out.

Von dem PI-Regler 27 wird aus dem Differenzstromraumzeiger i_{d,q_delta} ein dq-Sollspannungsraumzeiger u_{d,q_s} gebildet, der eine der Regelabweichung entgegenwirkende Sollspannung des Wechselrichters 1 in einem dq-Koordinatensystem beschreibt.

Von dem zweiten Transformierer 33 wird aus dem dq-Sollspannungsraumzeiger u_{d,q_s} ein Sollspannungsraumzeiger u_{α,β_s} für die Raumzeigermodulation gebildet, indem der dq-Sollspannungsraumzeiger u_{d,q_s} unter Verwendung des Rotorwinkels ϕ in ein statorfestes αβ-Koordinatensystem transformiert wird.

Der Raumzeigermodulator 29 erzeugt aus dem Sollspannungsraumzeiger u_{α,β_s} und einer Nullsystemverschiebung µ die Ansteuersignale C1, C2, C3, mit denen die elektronischen Schalter S1, S2, S3 angesteuert werden. Die Nullsystemverschiebung µ definiert ein Zeitdauerverhältnis von Zeitdauern, in denen während einer Taktperiode der Raumzeigermodulation jeweils einer der Nullspannungsraumzeiger angelegt wird. Im Fall von zwei Nullspannungsraumzeigern definiert die Nullsystemverschiebung µ also beispielsweise den Quotienten einer ersten Zeitdauer, in der während einer Taktperiode ein erster Nullspannungsraumzeiger angelegt wird, und einer zweiten Zeitdauer, in der während der Taktperiode der zweite Nullspannungsraumzeiger angelegt wird.

Die Nullsystemverschiebung µ wird additiv gemäß µ=µ₁+µ₂ aus zwei Verschiebungsanteilen µ₁, µ₂ gebildet. Ein erster Verschiebungsanteil µ₁ wird von dem Raumzeigermodulator 29 in Abhängigkeit von dem Sollspannungsraumzeiger u_{α,β_s} gebildet definiert ein Zeitdauerverhältnis, mit dem der Sollspannungsraumzeiger u_{α,β_s} nullsystemfrei realisierbar ist.

Der zweite Verschiebungsanteil µ₂ wird von den Addierer 23 und dem P-Regler 25 in Abhängigkeit von den Filtereingangsströmen i1_in, i2_in, i3_in derart gebildet, dass er eine Nullsystemspannung der Filtereingangsspannungen bewirkt, die Schwingungen im Nullsystem der Filtereingangsströme i1_in, i2_in, i3_in dämpft. Dazu werden von dem Addierer 23 die von der ersten Messvorrichtung 17 erfassten Istwerte der Filtereingangsströme i1_in, i2_in, i3_in zu einem Summenstrom i0-in addiert. Aus dem Summenstrom i0-in wird von dem P-Regler 25 der zweite Verschiebungsanteil µ₂ ermittelt.

Statt die Filtereingangsströme i1_in, i2_in, i3_in und die Filterausgangsströme i1_out, i2_out, i3_out mit Messvorrichtungen 17 und 19 zu messen, kann auch vorgesehen sein, nur die Filtereingangsströme i1_in, i2_in, i3_in zu messen und die Filterausgangsströme i1_out, i2_out, i3_out zu berechnen. Alternativ kann vorgesehen sein, nur die Filterausgangsströme i1_out, i2_out, i3_out zu messen und die Filtereingangsströme i1_in, i2_in, i3_in zu berechnen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines selbstgeführten Wechselrichters (1), der aus einem Gleichspannungskreis (3) gespeist wird und elektronische Schalter (S1, S2, S3) zum Erzeugen einer dreiphasigen Ausgangsspannung und ein den elektronischen Schaltern (S1, S2, S3) nachgeschaltetes, an den Gleichspannungskreis (3) gekoppeltes dreiphasiges Ausgangsfilter (5) aufweist, wobei
- die elektronischen Schalter (S1, S2, S3) mit einer Raumzeigermodulation gesteuert werden, bei der
- eine Nullsystemspannung von Filtereingangsspannungen des Ausgangsfilters (5) in Abhängigkeit von einem Sollspannungsraumzeiger (u_{α,β_s}) der Raumzeigermodulation und Filtereingangsströmen (i1_in, i2_in, i3_in) des Ausgangsfilters (5) derart geregelt wird, dass Schwingungen in einem Nullsystem der Filtereingangsströme (i1_in, i2_in, i3_in) unterdrückt werden.

2. Verfahren nach Anspruch 1, wobei die Nullsystemspannung der Filtereingangsspannungen durch eine Nullsystemverschiebung (µ) geregelt wird, die ein Zeitdauerverhältnis von Zeitdauern definiert, in denen während einer Taktperiode der Raumzeigermodulation jeweils einer der Nullspannungsraumzeiger angelegt wird.

3. Verfahren nach Anspruch 2, wobei die Nullsystemverschiebung (µ) zwei Verschiebungsanteile (µ₁, µ₂) aufweist, wobei ein erster Verschiebungsanteil (µ₁) in Abhängigkeit von dem Sollspannungsraumzeiger (u_{α,β_s}) der Raumzeigermodulation bestimmt wird und der zweite Verschiebungsanteil (µ₂) in Abhängigkeit von den Filtereingangsströmen (i1_in, i2_in, i3_in) des Ausgangsfilters (5) gebildet wird.

4. Verfahren nach Anspruch 3, wobei die Nullsystemverschiebung (µ) durch eine Addition der beiden Verschiebungsanteile (µ₁, µ₂) gebildet wird.

5. Verfahren nach Anspruch 3 oder 4, wobei der erste Verschiebungsanteil (µ₁) ein Zeitdauerverhältnis definiert, mit dem der Sollspannungsraumzeiger (u_{α,β_s}) nullsystemfrei realisierbar ist.

6. Verfahren nach einem der Ansprüche 3 bis 5, wobei durch den zweiten Verschiebungsanteil (µ₂) eine Nullsystemspannung der Filtereingangsspannungen bewirkt wird, die Schwingungen im Nullsystem der Filtereingangsströme (i1_in, i2_in, i3_in) dämpft.

7. Verfahren nach einem der Ansprüche 3 bis 6, wobei der zweite Verschiebungsanteil mittels eines P-Reglers (25) in Abhängigkeit von einem Summenstrom (i0_in), der aus den Filtereingangsströmen (i1_in, i2_in, i3_in) des Ausgangsfilters (5) gebildet wird, gebildet wird.

8. Verfahren nach Anspruch 7, wobei die Filtereingangsströme (i1_in, i2_in, i3_in) des Ausgangsfilters (5) gemessen werden und der Summenstrom (i0_in) durch Addition der gemessenen Filtereingangsströme (i1_in, i2_in, i3_in) gebildet wird.

9. Verfahren nach einem der vorhergehenden Ansprüche, wobei der Sollspannungsraumzeiger (u_{α,β_s}) der Raumzeigermodulation in Abhängigkeit von Filterausgangsströmen (i1_0ut, i2_out, i3_out) des Ausgangsfilters (5) gebildet wird.

10. Selbstgeführter Wechselrichter (1), der aus einem Gleichspannungskreis (3) gespeist wird, der Wechselrichter (1) umfassend
- elektronische Schalter (S1, S2, S3) zum Erzeugen einer dreiphasigen Ausgangsspannung,
- ein den elektronischen Schaltern (S1, S2, S3) nachgeschaltetes, an den Gleichspannungskreis (3) gekoppeltes dreiphasiges Ausgangsfilter (5) und
- eine Steuereinheit (7), die zur Ansteuerung der elektronischen Schalter (S1, S2, S3) mit einer Raumzeigermodulation eingerichtet ist, bei der eine Nullsystemspannung von Filtereingangsspannungen des Ausgangsfilters (5) in Abhängigkeit von einem Sollspannungsraumzeiger (u_{α,β_s}) der Raumzeigermodulation und Filtereingangsströmen (i1_in, i2_in, i3_in) des Ausgangsfilters (5) derart geregelt wird, dass Schwingungen in einem Nullsystem der Filtereingangsströme (i1_in, i2_in, i3-in) unterdrückt werden.

11. Wechselrichter (1) nach Anspruch 10, wobei die Steuereinheit (7) dazu eingerichtet ist, die Nullsystemspannung der Filtereingangsspannungen durch eine Nullsystemverschiebung (µ) zu regeln, die ein Zeitdauerverhältnis von Zeitdauern definiert, in denen während einer Taktperiode der Raumzeigermodulation jeweils einer der Nullspannungsraumzeiger angelegt wird.

12. Wechselrichter (1) nach Anspruch 11, wobei die Steuereinheit (7) einen Raumzeigermodulator (29) aufweist, der dazu eingerichtet ist, einen ersten Verschiebungsanteil (µ₁) der Nullsystemverschiebung (µ) in Abhängigkeit von dem Sollspannungsraumzeiger (u_{α,β_s}) der Raumzeigermodulation zu bestimmen.

13. Wechselrichter (1) nach Anspruch 11 oder 12, wobei die Steuereinheit (7) einen P-Regler (25) aufweist, der dazu eingerichtet ist, einen zweiten Verschiebungsanteil (µ₂) der Nullsystemverschiebung (µ) in Abhängigkeit von einem Summenstrom (i0_in), der aus den Filtereingangsströmen (i1_in, i2_in, i3_in) des Ausgangsfilters (5) gebildet wird, zu bilden.

14. Wechselrichter (1) nach einem der Ansprüche 10 bis 13, wobei die Steuereinheit (7) dazu ausgebildet ist, einen Sollspannungsraumzeiger (u_{α,β_s}) der Raumzeigermodulation in Abhängigkeit von Filterausgangsströmen (i1_0ut, i2_out, i3_out) des Ausgangsfilters (5) zu bilden.

15. Wechselrichter (1) nach einem der Ansprüche 10 bis 14 mit einer ersten Messvorrichtung (17) zum Messen der Filtereingangsströme (i1_in, i2_in, i3_in) und/oder einer zweiten Messvorrichtung (19) zum Messen von Filterausgangsströmen (i1_0ut, i2_out, i3_out) des Ausgangsfilters (5).
